Europäisches Patentamt

European Patent Office

Office européen des brevets

(11) Publication number: **0 238 675**
**A1**

# (12) EUROPEAN PATENT APPLICATION

(21) Application number: **86101141.9**

(22) Date of filing: **29.01.86**

(51) Int. Cl.⁴: **E21B 33/13 , E21B 21/06**

(43) Date of publication of application:
**30.09.87 Bulletin 87/40**

(84) Designated Contracting States:
**DE FR GB NL**

(71) Applicant: **Oliver, John E.**
**3752 Del Monte**
**Houston Texas 77019(US)**
Applicant: **Singer, Arnold M.**
**3042 Las Palmas**
**Houston Texas 77027(US)**

(72) Inventor: **Oliver, John E.**
**3752 Del Monte**
**Houston Texas 77019(US)**
Inventor: **Singer, Arnold M.**
**3042 Las Palmas**
**Houston Texas 77027(US)**

(74) Representative: **Jack, Bruce James et al**
**FORRESTER & BOEHMERT**
**Widenmayerstrasse 4/I**
**D-8000 Munchen 22(DE)**

(54) **Improved well cementing process.**

(57) Improved bonding in a well system between cement, well tubular members and the formation about the well bore at a pay zone is obtained by displacing drilling fluid materials (mud, solids, filter cake , etc.) under turbulent flow conditions by a slug of concentrate consisting essentially of a water-free mixture of a surfactant and an alcohol. The aqueous fluid cement immediately follows the slug. Residual filter cake and the well tubular members are water-wetted so that cement on hardening has an improved bonding both to the tubular members and to the formation at the pay zone.

## Improved Well Cementing Process

This invention relates generally to the cementing of well bores and, more particularly, to the cleaning of well bores to improve cement bonding to formations and to well tubular members such as casing and string, at the pay zone.

It is common practice to clean a well bore at the pay zone before cementing operations to ensure good bonding between the cement and the well tubular members and the formation. Thus cement flushes are used for this purpose to remove drilling fluid and mud filter cake to ensure a clean well bore before the introduction thereto of an aqueous fluid cement. For example, a flush fluid can be used as a spacer ahead of the cement so as to displace the mud materials before the cement reaches the pay zone. Flush fluids used in this way have to be used in relatively large amounts to ensure adequate cleaning of the well bore. However, such flush fluids are aqueous and water in the flush fluid and/or in the cement slurry being used causes viscosity and mobility changes in the mud residing in the well bore. As a result, channelling of the flush, and following cement, through the mud residues causes poor bonding of the cement to the formation and tubular members. Where mud residues are from oil based mud, these problems are greatly increased.

The presence of water in the flush causes other severe problems. In pay zone formations sensitive to swelling (e.g., shales), the presence of substantial amounts of water in the flush can (1) remove all mud filter cake from the well bore, (2) prevent proper cement bonding to the formation and (3) greatly reduce the permability of swelling formations. Moreover, cement slurries adversely affect the properties of the residual mud materials, which usually become thickened with corresponding viscosity increases. Usually, these mud residue property changes are caused by changes in alkalinity induced by the alkalinity of the cement slurries. The thickened mud residues are less easily removed, and, therefore, more mud residue remains to degrade the cement bonding. When oil based muds are used in the well bore, these undesired results are even more pronounced.

An object of this invention is to overcome these problems of prior practices.

Thus the invention provides a process for improved bonding in a well system between cement, well tubular members and the formation about the well bore at a pay zone, characterized by: displacing drilling fluid materials, including mud, solids and filter cake, from the annulus between the well tubular members and the formation by circulating therein under turbulent flow conditions a slug of concentrate consisting essentially of a water-free mixture of surfactant and alcohol; and following said slug of concentrate with an aqueous fluid cement whereby said slug of concentrate removes displaceable drilling fluid materials from the annulus at the pay zone but leaves some residual filter cake on the formation, said well tubular members and residual filter cake both residing in surface water-wetted condition after passage of said slug, whereby hardening of the cement produces an improved bonding to both the well tubular members and the formation at the pay zone.

Preferably the volume of said slug of concentrate is sufficient to carry the displaced drilling fluid materials in a floc state, without adversely affecting any water-sensitive formation at the pay zone.

Desirably the slug of concentrate contains less than 5 percent of water by volume.

The surfactant component of the slug of concentrate preferably has a molecular weight in the range 150 to 500 and predominantly hydrophobic characteristics, being selected from aliphatic amines, aliphatic amides and aliphatic amine oxides, in which the amine or amide has an alkyl group with 8 to 18 carbon atoms. Particularly preferred surfactants are the amide products of reacting a secondary amine such as diethanolamine with an organic monobasic fatty acid of the general formula $C_nH_{2n+1}COOH$ wherein n is an integer in the range 12 to 18. A preferred fatty acid for this reaction is oleic acid. Such a reaction product is desirably neutralized by reaction with a tertiary amine such as triethanolamine.

The alcohol component of the slug of concentrate is desirably a liquid aliphatic alcohol with 5 to 14 carbon atoms. An especially suitable alcohol is 2-ethylhexanol, but other alcohols that work well are n-pentanol, n-hexanol and octanol.

The slug of concentrate is desirably a 50/50 mixture by volume of the surfactant and the alcohol.

The process of the invention may be practised in conventional wells having surface equipment used for drilling and completion, and especially for carrying out the cementing of the formation zone to be placed into production, i.e., the pay zone. The well can have various types of tubular members, such as casing and production tubing at the pay zone. The surface equipment used for cementing can be used in this process provided that a small slug of the surfactant/alcohol concentrate can be introduced immediately ahead of incoming aqueous fluid cement. Usually the well will be subjected to normal cementing flows, i.e., downwardly in the tubing and upwardly in the annulus between the tubing, casing and/or exposed formation. However, the process can be used with other flow configurations.

At the beginning of the process, it will be assumed that the well is yet filled with drilling fluid materials, such as drilling mud, solids of various kinds, including cuttings and barite, and filter cake in the annulus between the tubular members and the formation at the pay zone. In accordance with conventional practices, the cementing operations will be co-extensive with this annulus throughout the pay zone.

The slug of concentrate is introduced as a spacer immediately ahead of the aqueous fluid cement. The slug is introduced into the tubing in a relatively small volume, e.g., 0.16 - 1.6m$^3$ (1-10 barrels). Usually, the slug volume needs to be not greater than will fill volumetrically the well bore annulus throughout the vertical extent of the pay zone in the formation of interest. The aqueous fluid cement is introduced into the casing on top of the slug and pumped in a conventional manner to the pay zone where it is desired to be hardened into an isolating barrier.

The linear velocity of the slug being displaced through the well bore depends upon the hole diameter or annulus size and usually ranges between 24 and 61 metres per minute (80 and 200 feet per minute) to maintain the laminar flow condition for the non-Newtonian drilling fluid materials, which have at flow conditions a Reynolds number of about 100. At these linear velocities, the slug of concentrate being a Newtonian fluid is subject to turbulent flow as a result of its greater Reynolds number.

The turbulent flow of the slug removes the displaceable drilling fluid materials. The displaced drilling fluid materials are thoroughly suspended, as a floc, by the electrical charges thereon, and are therefore efficiently carried away from the well bore at the pay zone in the formation. More particularly, the slug of concentrate penetrates the filter cake on the formation to remove loose materials. The tubular members and exposed formation at the pay zone are thereby rendered free of loose drilling fluid materials, and they are in a surface water-wetted condition. As a result, the aqueous fluid cement arrives at the pay zone in optimum condition because of the clean and debris-free condition of the tubular members and formation, even though the latter will be covered by some remaining thicknesses of filter cake.

When the cement hardens, a good cement-to-metal-to-formation bonding is produced. The water-wetted filter cake on the formation especially allows the cement to penetrate the formation at the well bore with greatly increased bonding strength.

The slug efficiently displaces the drilling fluid and debris before it, and yet it is efficiently itself displaced volumetrically by the aqueous fluid cement. Even oil-based mud materials are effectively displaced by the slug which efficiently removes the displaceable drilling fluid materials, leaving a clear and water-wetted surface environment for the incoming aqueous fluid cement.

The displaced drilling fluid and slug can remain in the well bore after the cement has hardened. However, they can be removed by annulus displacement techniques, if desired.

The slug is a substantially water-free concentrate, and it preferably has less than 5 percent of water (by volume). The concentrate is a mixture of alcohol and surfactant.

In the preferred embodiment, the alcohol is 2-ethyl hexanol and the surfactant is an amine, or preferably an amine reaction product salt, and each component is used in about equal amounts by volume in the concentrate. Other alcohols that work well include n-pentanol, n-hexanol and octanol. The preferred 2-ethyl hexanol can be obtained from Tenneco Chemicals, Inc., and it has a relatively high COC flash point at 84°C (183°F), with a specific gravity of about 0.83 at 25°C (77°F).

Examples of amines usable as the surfactant in this invention are cocoamine, octylamine, dioctylamine, decylamine and dodecylamine. Cocoamine may be generally represented by the formula $CH_3(CH_2)_{10}CH_2\text{-}NH_2$ and it is prepared from monoethenoid fatty acids derived from coconuts. The "coco" group $C_{12}H_{25}$ is not a group containing a specific number of carbon atoms, but is a number of individual groups containing different numbers of carbon atoms. However the $C_{12}H_{25}$ group is in greater amount than any other group.

The cocoamine may be used in the form of a condensation product, i.e., oxalkylated cocoamine such as ethoxylated cocoamine formed by subjecting cocoamine to a condensation reaction with ethylene oxide in a manner well known in the art. In general, the condensation product of one mol of cocoamine with 2 to 15 mols of ethylene oxide may be employed with good results. Preferably, the condensation product is formed by condensing 10 mols of ethylene oxide per mol of cocoamine. Expressed on the basis of molecular weight, the ethoxylated cocoamine may have an average molecular weight between 285 and 860, but preferably, has an average molecular weight of about 645.

Preferably, however, the surfactant is the amide product of reaction of monobasic fatty acid and a secondary amine, neutralized by reaction with a tertiary amine. More particularly, the fatty acid can be given the formula $C_nH_{2n+1}COOH$ wherein n is an integer in the range 12 to 18. The fatty acid can for instance, be selected from oleic and dimerized oleic, linoleic, palmitoleic, palmitic, myristic, myrestoleic and stearic acids. The oleic acid amide products give good results.

The secondary amines for this reaction are selected from normal aliphatic amines that react with the monobasic fatty acids to form fatty amines that are generally used as nonionic emulsifiers. Good results are obtained when the secondary amine is diethanolamine.

One amide reaction product surfactant giving excellent results with 2-ethyl hexanol is a product of Witco, Inc., and available under the tradename Witcamide 1017 (surfactant). This product is reported to be the amide reaction product of oleic acid and diethanolamine, neutralized with triethanolamine. It has a specific gravity of 1.0 (same as water), is amber with a PMCC flash point abut 93°C (200°F), and is a product not hazardous under current U.S. Department of Labor definitions.

The manner in which the components and mixture thereof act to displace and suspend drilling fluids and debris in the process of the invention cannot be determined with certainty from information presently available. It is believed that the alcohol serves to destabilize the dispersed solids by disrupting their electrophoretic charges, and then the surfactant acts to gather the solids, and assembled oil materials, into a loose solids system that can be removed subsequently by careful liquid/solid phase separation techniques which do not impose shear or mixing energy during solids removal.

The features disclosed in the foregoing description and/or in the following claims may, both separately and in any combination thereof, be material for realising the invention in diverse forms thereof.

## Claims

1. A process for improved bonding in a well system between cement, well tubular members and the formation about the well bore at a pay zone, characterized by: displacing drilling fluid materials, including mud, solids and filter cake, from the annulus between the well tubular members and the formation by circulating therein under turbulent flow conditions a slug of concentrate consisting essentially of a water-free mixture of surfactant and alcohol; and following said slug of concentrate with an aqueous fluid cement whereby said slug of concentrate removes displaceable drilling fluid materials from the annulus at the pay zone but leaves some residual filter cake on the formation, said well tubular members and residual filter cake both residing in surface water-wetted condition after passage of said slug, whereby hardening of the cement produces an improved bonding to both the well tubular members and the formation at the pay zone.

2. A process according to claim 1, further characterized in that the volume of said slug of concentrate is sufficient to carry displaced drilling fluid materials in a suspended floc state, without adversely affecting any water sensitive formations at the pay zone.

3. A process according to claim 1 or 2, further characterized in that said slug of concentrate contains less than 5 percent of water by volume.

4. A process according to claim 1, 2 or 3, further characterized in that the surfactant has a molecular weight in the range 150 to 500 with predominantly hydrophobic characteristics, and is selected from aliphatic amines, aliphatic amides and aliphatic amine oxides, in which the amine or amide has an alkyl group with 8 to 18 carbon atoms.

5. A process according to claim 4, further characterized in that the surfactant is the amide product of reacting a secondary amine with an organic monobasic fatty acid of the general formula $C_nH_{2n1}COOH$ wherein n is an integer in the range 12 to 18.

6. A process according to claim 5, further characterized in that the surfactant is the amide product of reacting diethanolamine with oleic acid.

7. A process according to claim 5 or 6, further characterized in that said amide product is neutralized with triethanolamine.

8. A process according to any preceding claim, further characterized in that the alcohol is 2-ethyl hexanol.

9. A process according to any preceding claim, further characterized in that said slug of concentrate is a 50/50 mixture by volume of the surfactant and the alcohol.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | EP-A-0 103 779 (J.E. OLIVER)<br><br>* Claims 16-19; page 14, line 21 - page 15, line 28 *<br><br>--- | 1,2,4-9 | E 21 B 33/13<br>E 21 B 21/06 |
| Y | US-A-4 474 240 (J.E. OLIVER)<br><br>* Claims 1-3; column 6, line 42 - column 7, line 23 *<br><br>--- | 1,2,4-9 | |
| Y | US-A-4 127 174 (J.R. SHARPE)<br><br>* Claims 1-3 *<br><br>----- | 1,2,4-9 | |

TECHNICAL FIELDS
SEARCHED (Int. Cl.4)

E 21 B

The present search report has been drawn up for all claims

| Place of search | Date of completion of the search | Examiner |
|---|---|---|
| THE HAGUE | 26-09-1986 | ROTSAERT L.D.C. |